(19) Europäisches Patentamt
European Patent Office
Office européen des brevets

(11) **EP 4 672 416 A1**

(12) **EUROPEAN PATENT APPLICATION**
published in accordance with Art. 153(4) EPC

(43) Date of publication:
**31.12.2025 Bulletin 2026/01**

(21) Application number: **24762978.5**

(22) Date of filing: **06.02.2024**

(51) International Patent Classification (IPC):
*H01M 10/058* (2010.01)    *H01M 10/0525* (2010.01)

(52) Cooperative Patent Classification (CPC):
**H01M 4/13; H01M 10/0525; H01M 10/058;**
**H01M 10/42; Y02E 60/10**

(86) International application number:
**PCT/CN2024/076427**

(87) International publication number:
**WO 2024/179295 (06.09.2024 Gazette 2024/36)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **01.03.2023 CN 202310182855**

(71) Applicant: **Ningde Amperex Technology Limited**
**Ningde City, 352100 (CN)**

(72) Inventor: **ZHU, Shan**
**Ningde, Fujian 352100 (CN)**

(74) Representative: **Icosa**
**83 avenue Denfert-Rochereau**
**75014 Paris (FR)**

(54) **ELECTROCHEMICAL DEVICE AND ELECTRIC APPARATUS**

(57) An electrochemical apparatus includes a positive active material layer (2212) and a negative active material layer (2222), where the positive active material layer (2212) includes a positive active material, and the negative active material layer (2222) includes a negative active material. The electrochemical apparatus satisfies the following formulas: $0.5 \leq (U_0 - U) / (1.06 - CB) \leq 1.5$; and $CB = (A' \times B' \times C') / (A \times B \times C)$; by controlling the relationship among the charge cut-off voltage U volt of the electrochemical apparatus, the Full-charge Voltage $U_0$ volt of the battery, and the ratio CB of the negative electrode discharge capacity per unit area to the positive electrode discharge capacity per unit area, $0.5 \leq (U_0 - U) / (1.06 - CB) \leq 1.5$, the high-temperature performance of the electrochemical apparatus can be improved while a lithium plating window can be improved, thereby improving kinetic performance of the battery.

FIG. 1

**Description**

**CROSS-REFERENCE TO RELATED APPLICATIONS**

This application claims priority to Chinese patent application no. 202310182855.X, entitled "ELECTROCHEMICAL APPARATUS AND ELECTRICAL DEVICE", and filed on march 01, 2023, the entire contents of which are incorporated herein by reference.

**TECHNICAL FIELD**

This application relates to an electrochemical apparatus and an electrical device.

**BACKGROUND**

Existing electrochemical apparatuses are subject to increasingly higher requirements for electrochemical performance. This requires electrochemical apparatuses with enhanced high-temperature performance.
However, the high-temperature performance of current common electrochemical apparatuses fails to meet requirements.

**SUMMARY**

An objective of this application is to provide an electrochemical apparatus and an electrical device to improve high-temperature performance.
Embodiments of this application are implemented in the following way:
In a first aspect, an embodiment of this application provides an electrochemical apparatus including a positive active material layer and a negative active material layer, where the positive active material layer includes a positive active material, and the negative active material layer includes a negative active material.
The electrochemical apparatus satisfies the following formulas:

$$0.5 \leq (U0 - U) / (1.06 - CB) \leq 1.5;$$

$$CB = (A' \times B' \times C') / (A \times B \times C);$$

where A is a mass percentage of positive active material in the positive active material layer, B is a gram capacity of the positive active material, with a unit of mAh/g, C is a mass per unit area of the positive active material layer, with a unit of $mg/cm^2$, A' is a mass percentage of negative active material in the negative active material layer, B' is a gram capacity of the negative active material, with a unit of mAh/g, and C' is a mass per unit area of the negative active material layer, with a unit of $mg/cm^2$; $U_0$ is a Full-charge Voltage of a battery, which refers to a voltage of the battery when it is fully charged; U is a Charging Voltage Limit, which is a maximum charge voltage during an actual charging process; and U is less than $U_0$.
In the above-mentioned technical solution, by controlling the relationship among the charge cut-off voltage U of the electrochemical apparatus, the Full-charge Voltage $U_0$ of the battery, and the ratio CB of the negative electrode discharge capacity per unit area to the positive electrode discharge capacity per unit area, $0.5 \leq (U_0 - U) / (1.06 - CB) \leq 1.5$, the high-temperature performance of the electrochemical apparatus can be improved while a lithium plating window can be improved, thereby improving kinetic performance of the battery.
In some optional embodiments, $0.7 \leq (U_0 - U) / (1.06 - CB) \leq 1.5$.
In the above-mentioned technical solution, the relationship among the charge cut-off voltage U of the electrochemical apparatus, the Full-charge Voltage $U_0$ of the battery, and the ratio CB of the negative electrode discharge capacity per unit area to the positive electrode discharge capacity per unit area is controlled within a smaller range, so that the excellent high-temperature performance and lithium plating window of the electrochemical apparatus can be obtained.
In some optional embodiments, $0.9 \leq (U_0 - U) / (1.06 - CB) \leq 1.3$.
In the above-mentioned technical solution, the relationship among the charge cut-off voltage U of the electrochemical apparatus, the Full-charge Voltage $U_0$ of the battery, and the ratio CB of the negative electrode discharge capacity per unit area to the positive electrode discharge capacity per unit area is controlled within a smaller range, so that the better high-temperature performance and lithium plating window of the electrochemical apparatus can be obtained.
In some optional embodiments, $1.01 \leq CB \leq 1.05$.
In the above-mentioned technical solution, by limiting the ratio CB of the negative electrode discharge capacity per unit area to the positive electrode discharge capacity per unit area of the electrochemical apparatus to a smaller range, the high-temperature performance and lithium plating window of the electrochemical apparatus can be further improved.

In some optional embodiments, $1.01 \leq CB \leq 1.03$.

In the above-mentioned technical solution, by limiting the ratio CB of the negative electrode discharge capacity per unit area to the positive electrode discharge capacity per unit area of the electrochemical apparatus to a smaller range, the high-temperature performance and lithium plating window of the electrochemical apparatus can be further improved.

In some optional embodiments, the positive active material includes at least one of lithium iron phosphate, lithium cobalt oxide, lithium nickel cobalt manganese oxide, lithium nickel cobalt aluminum oxide, or lithium manganese oxide.

In terms of process, a CB value is generally adjusted by controlling a coating weight of the positive active material layer, that is, the mass per unit area C of the positive active material, thereby affecting a value range of the parameter $(U_0 - U) / (1.06 - CB)$. In the above-mentioned technical solution, the positive active material includes: at least one of lithium iron phosphate, lithium cobalt oxide, lithium nickel cobalt manganese oxide, lithium nickel cobalt aluminum oxide, or lithium manganese oxide. These positive active materials are easy to obtain a smaller CB value, improve the high-temperature performance of the electrochemical apparatus, and at the same time can make $0.5 \leq (U_0 - U) / (1.06 - CB) \leq 1.5$, thereby improving the lithium plating window.

In some optional embodiments, the negative active material includes at least one of graphite, silicon, silicon alloy, or stannum alloy.

In terms of process, the CB value is generally adjusted by controlling the coating weight of the negative active material layer, that is, the mass per unit area C' of the negative active material layer, thereby affecting the value range of the parameter $(U_0 - U) / (1.06 - CB)$. In the above-mentioned technical solution, the negative active material includes: at least one of graphite, silicon, silicon alloy, or stannum alloy. These negative active materials can be compounded with the preceding positive active materials to control a range of the CB value, so that $1 < CB < 1.06$, and then $0.5 \leq (U_0 - U) / (1.06 - CB) \leq 1.5$, thereby improving the high-temperature performance of the electrochemical apparatus while improving the lithium plating window.

In some optional embodiments, the electrochemical apparatus includes a binder.

The binder includes at least one of polyvinylidene difluoride, a copolymer of vinylidene fluoride and fluorinated olefin, polyvinyl pyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol.

In the above-mentioned technical solution, the binder includes at least one of polyvinylidene difluoride, a copolymer of vinylidene fluoride and fluorinated olefin, polyvinyl pyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol, which can better match the positive active material and the negative active material of the above-mentioned electrochemical apparatus, thereby making $0.5 \leq (U_0 - U) / (1.06 - CB) \leq 1.5$, improving the high-temperature performance of the electrochemical apparatus while improving the lithium plating window.

In some optional embodiments, the electrochemical apparatus includes: a conductive agent.

The conductive agent includes at least one of conductive carbon black, carbon nanotubes, conductive graphite, graphene, acetylene black, or carbon nanofibers.

In the above-mentioned technical solution, the conductive agent includes: at least one of conductive carbon black, carbon nanotubes, conductive graphite, graphene, acetylene black, or carbon nanofiber, which can better match the positive active material and the negative active material of the above-mentioned electrochemical apparatus, thereby making $0.5 \leq (U_0 - U) / (1.06 - CB) \leq 1.5$, improving the high-temperature performance of electrochemical apparatus while improving the lithium plating window.

In a second aspect, an embodiment of this application provides an electrical device, including the electrochemical apparatus provided in the first aspect.

In the above-mentioned technical solution, the electrical device includes the electrochemical apparatus provided in the first aspect, exhibiting excellent battery kinetic performance.

## BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.

FIG. 1 is an exploded view of a battery according to some embodiments of this application;
FIG. 2 is a schematic partial schematic diagram of an electrode assembly according to some embodiments of this application;
FIG. 3 is a partial schematic diagram of a positive electrode plate according to some embodiments of this application;

and
FIG. 4 is a variation diagram of negative electrode potential after charging process adjustment according to some embodiments of this application.

List of reference numerals:

battery 20; shell 21; electrode assembly 22;
housing 211; cover 212; positive electrode plate 221; negative electrode plate 222; separator 223;
positive current collector 2211; positive active material layer 2212;
negative current collector 2221; and negative active material layer 2222.

## DETAILED DESCRIPTION

To make the objectives, technical solutions, and advantages of the embodiments of this application clearer, the technical solutions in the embodiments of this application will be described in a clear and comprehensive manner below. Unless conditions are otherwise specified in the embodiments, conventional conditions or conditions recommended by the manufacturer apply. A reagent or instrument used herein without specifying the manufacturer is a conventional product that is commercially available from the market.

Embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein have the same meanings as commonly understood by a person skilled in the technical field of this application. The terms used herein are for the purpose of describing specific embodiments only and are not intended to limit this application. The terms "include" and "contain" and any variations thereof used in the specification, claims, and brief description of drawings of this application are intended to cover a non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence.

Reference to "embodiment" herein means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In embodiments of this application, the same reference numeral denotes the same component. For brevity, detailed descriptions of the same component are omitted in a different embodiment. It should be understood that the dimensions such as height, length, and width of various components in the embodiments of this application illustrated in the drawings, as well as the dimensions such as the overall height, length, and width of the integrated apparatus, are merely exemplary and should not be construed as limiting this application.

Currently, from the perspective of market trends, the application of electrochemical apparatuses is becoming increasingly widespread. The electrochemical apparatuses are not only applied in energy storage power systems such as hydro, thermal, wind, and solar power plants, but also widely used in various fields including electric vehicles such as electric bicycles, electric motorcycles, and electric automobiles, military equipment, and aerospace. With the continuous expansion of the application fields of the electrochemical apparatuses, the market demand for them is also steadily increasing.

Therefore, the electrochemical apparatuses are subject to increasingly requirements for electrochemical performance, e.g., kinetic performance. This requires electrochemical apparatuses with enhanced high-temperature performance.

Currently, common electrochemical apparatuses have insufficient high-temperature performance windows. The conventional approach is to improve the high-temperature performance by using a small CB design. However, reducing the CB would lead to lithium plating issues.

Through research, the applicant has found that the small CB design would reduce a gram capacity utilization of a positive electrode, thereby enhancing the high-temperature performance of the electrochemical apparatus. However, the small CB design can worsen a lithium plating window due to an increase in constant current charging (CC) cutoff state of charge (SOC), where the state of charge is a ratio of an available charge to a full charge in a battery.

On this basis, in order to improve the above-mentioned problems, this application provides an electrochemical apparatus, and by controlling the relationship among the charge cut-off voltage U of the electrochemical apparatus, the Full-charge Voltage U0 of the battery, and the ratio CB of the negative electrode discharge capacity per unit area to the positive electrode discharge capacity per unit area, $0.5 \leq (U_0 - U) / (1.06 - CB) \leq 1.5$, the high-temperature performance of the electrochemical apparatus can be improved while a lithium plating window can be improved, thereby improving kinetic performance of the battery.

The electrical device provided in this application includes the aforementioned electrochemical apparatus provided in this application, thereby achieving improving the high-temperature performance of the electrochemical apparatus while avoiding the lithium plating issues, thereby improving the electrochemical performance of the battery.

For convenience of explanation, a lithium-ion battery of an embodiment of this application is taken as an example for explanation.

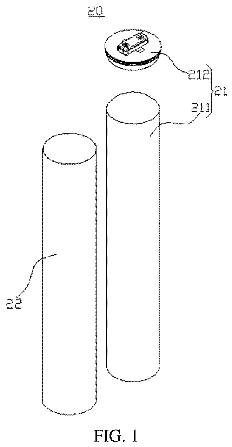

Referring to FIG. 1, in some embodiments of this application, a battery 20 may include a shell 21, an electrode assembly 22, and an electrolyte solution, where both the electrode assembly 22 and the electrolyte solution are accommodated within the shell 21. The shell 21 may include a housing 211 and a cover 212.

The housing 211 and the cover 212 may be of various shapes and sizes, such as cuboid, cylindrical, or hexagonal prism. Specifically, the shapes of the housing 211 and the cover 212 may be determined according to the specific shape and size of the electrode assembly 22. The materials of the housing 211 and the cover 212 can be various, for example, but not limited to, metals such as copper, iron, aluminum, stainless steel, or aluminum alloy. The material of a sealing ring can be various, for example, but not limited to, electrolyte solution corrosion-resistant, high-toughness, and fatigue-resistant materials like polypropylene (PP), polycarbonate (PC), or polyethylene terephthalate (PET). An outer surface of the housing 211 may be coated with a plating layer, and the material of the plating layer can be various, for example, but not limited to, corrosion-resistant materials such as Ni and Cr.

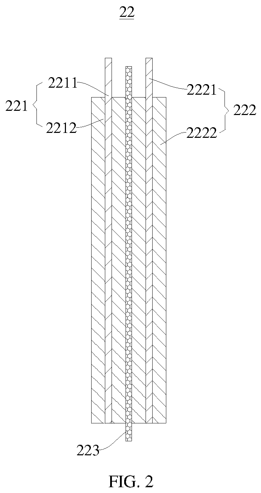

Referring to FIG. 2, in some embodiments of this application, the electrode assembly 22 may include a positive electrode plate 221, a negative electrode plate 222, and a separator 223. The separator 223 is located between the positive electrode plate 221 and the negative electrode plate 222 to serve a function of separation. As an example, stacking the positive electrode plate 221, the negative electrode plate 222, and the separator 223 sequentially, placing the separator 223 between the positive electrode plate 221 and the negative electrode plate 222 to serve a function of separation, and winding the stacked structure to obtain an electrode assembly 22. It is hereby noted that the electrode assembly 22 may adopt either a jelly-roll structure or a stacked structure, and the embodiments of this application are not limited thereto.

Furthermore, the separator 223 may include a base film and a coating layer. A material of the base film may be polypropylene (PP) or polyethylene (PE), among others. The coating layer may be a ceramic coating, e.g., aluminum oxide. an organic coating or an organic-inorganic hybrid coating.

Furthermore, the electrolyte solution may optionally be an electrolyte solution including lithium hexafluorophosphate.

By way of example, in some embodiments of this application, the electrolyte solution is selected as a mixed solution of lithium hexafluorophosphate and non-aqueous organic solvent.

Further optionally, the mixed solution of the non-aqueous organic solvent includes a mixed solution of ethylene carbonate, propylene carbonate, propyl acrylate, and diethyl carbonate. Further optionally, in some embodiments of this application, in the mixed solution of ethylene carbonate, propylene carbonate, propyl acrylate, and diethyl carbonate are mixed at a mass ratio of (0.5-2) : (0.5-2) : (0.5-2) : (0.5-2). By way of example, in the mixed solution of ethylene carbonate, propylene carbonate, propyl acrylate, and diethyl carbonate are mixed at a mass ratio of 1 : 1 : 1 : 1; or in the mixed solution of ethylene carbonate, propylene carbonate, propyl acrylate, and diethyl carbonate are mixed at a mass ratio of 0.5 : 1.5 : 2 : 0.6; or in the mixed solution of ethylene carbonate, propylene carbonate, propyl acrylate, and diethyl carbonate are mixed at a mass ratio of 1 : 0.7 : 1.3 : 1.1.

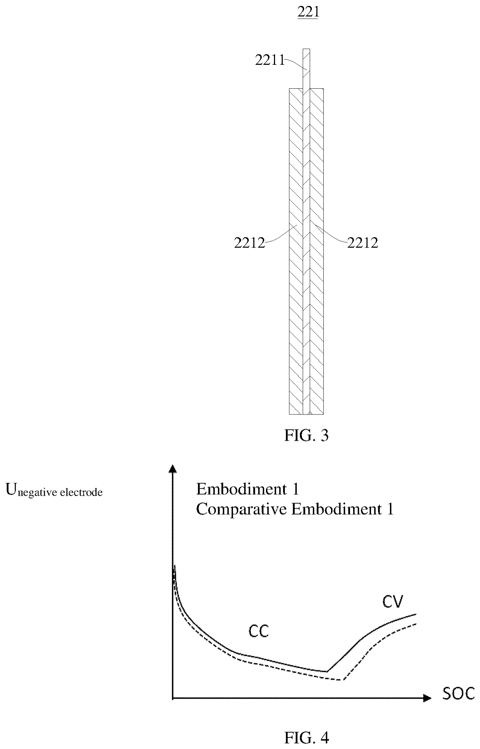

Furthermore, referring to FIG. 3, the positive electrode plate 221 includes a positive current collector 2211 and a positive active material layer 2212. Taking the battery 20 as an example, a material of the positive current collector 2211 may be aluminum; and the positive active material layer 2212 includes a positive active material, a conductive agent, and a binder. By way of example, in some implementations of this application, preparing a positive electrode slurry by mixing the positive active material, the conductive agent, and the binder in a solvent, e.g., an N-methyl-pyrrolidone (NMP) solution, and then coating the positive electrode slurry on the positive current collector 2211 to form the positive electrode plate 221.

Furthermore, in some embodiments of this application, the aforementioned positive active material includes at least one of lithium iron phosphate, lithium cobalt oxide, lithium nickel cobalt manganese oxide, lithium nickel cobalt aluminum oxide, or lithium manganese oxide.

By way of example, in some embodiments of this application, the aforementioned positive active material is selected from any one of lithium iron phosphate, lithium cobalt oxide, lithium nickel cobalt manganese oxide, lithium nickel cobalt aluminum oxide, or lithium manganese oxide; or a mixture composed of lithium iron phosphate and lithium cobalt oxide; a mixture composed of lithium nickel cobalt manganese oxide and lithium nickel cobalt aluminum oxide; a mixture composed of lithium nickel cobalt aluminum oxide and lithium manganese oxide; or a mixture composed of lithium iron phosphate, lithium cobalt oxide, and lithium nickel cobalt manganese oxide; or a mixture composed of lithium nickel cobalt manganese oxide, lithium nickel cobalt aluminum oxide, and lithium manganese oxide.

Furthermore, in some embodiments of this application, the binder in the aforementioned positive electrode slurry includes at least one of polyvinylidene difluoride, a copolymer of vinylidene fluoride and fluorinated olefin, polyvinyl pyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol.

As an example, the binder in the aforementioned positive electrode slurry is selected from any one of polyvinylidene difluoride, a copolymer of vinylidene fluoride and fluorinated olefin, polyvinyl pyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol; or a mixture composed of polyvinylidene difluoride and a copolymer of vinylidene fluoride and fluorinated olefin may be selected; or a mixture composed of polyvinylidene difluoride, a copolymer of vinylidene fluoride and fluorinated olefin, and polyvinyl pyrrolidone.

Furthermore, in some embodiments of this application, the conductive agent in the aforementioned positive electrode slurry includes at least one of conductive carbon black, carbon nanotubes, conductive graphite, graphene, acetylene black, or carbon nanofibers.

By way of example, the conductive agent in the aforementioned positive electrode slurry may be selected from any one of conductive carbon black, carbon nanotubes, conductive graphite, graphene, acetylene black, or carbon nanofibers; or a mixture composed of conductive carbon black and carbon nanotubes may be selected; or a mixture composed of conductive carbon black, carbon nanotubes, conductive graphite, and graphene may be selected.

Further, continuously referring to FIG. 3, the negative electrode plate 222 includes a negative current collector 2221 and a negative active material layer 2222. A material of the negative current collector 2221 may be copper, and the negative active material layer 2222 includes a negative active material, conductive carbon, and a binder.

By way of example, in some implementations of this application, preparing a negative electrode slurry by mixing the negative active material, the conductive agent, and the binder in a solvent, e.g., deionized water, and then coating the negative electrode slurry on the negative current collector 2221 to form the negative electrode plate 222.

Furthermore, in some embodiments of this application, the negative active material includes at least one of graphite, silicon, silicon alloy, or stannum alloy.

By way of example, in some embodiments of this application, the aforementioned negative active material is selected from any one of graphite, silicon, silicon alloy, or stannum alloy; or the aforementioned negative active material may be selected from a mixture of graphite and silicon; or a mixture of silicon alloy and stannum alloy; or a mixture of graphite, silicon, and silicon alloy.

Furthermore, in some embodiments of this application, the binder in the aforementioned negative electrode slurry includes at least one of styrene-butadiene rubber, polyvinylidene difluoride, a copolymer of vinylidene fluoride and fluorinated olefin, polyvinyl pyrrolidone, polyacrylonitrile, polymethyl acrylate, polytetrafluoroethylene, sodium carboxymethyl cellulose, polyurethane, fluorinated rubber, or polyvinyl alcohol.

By way of example, the binder in the aforementioned negative electrode slurry may be selected from any one of styrene-butadiene rubber, polyvinylidene difluoride, a copolymer of vinylidene fluoride and fluorinated olefin, polyvinyl pyrrolidone, polyacrylonitrile, polymethyl acrylate, polytetrafluoroethylene, sodium carboxymethyl cellulose, polyurethane, fluorinated rubber, or polyvinyl alcohol; or a mixture composed of styrene-butadiene rubber and polyvinylidene difluoride may be selected; or a mixture composed of styrene-butadiene rubber, polyvinylidene difluoride, and polyacrylonitrile.

Furthermore, in some implementations of this application, the conductive agent in the aforementioned negative electrode slurry includes at least one of conductive carbon black, carbon nanotubes, conductive graphite, graphene, acetylene black, or carbon nanofibers.

By way of example, the conductive agent in the aforementioned negative electrode slurry may be selected from any one of conductive carbon black, carbon nanotubes, conductive graphite, graphene, acetylene black, or carbon nanofibers; or a mixture composed of conductive carbon black and carbon nanofibers may be selected; or a mixture composed of conductive carbon black, carbon nanofibers, conductive graphite, and graphene may be selected.

Furthermore, the electrochemical apparatus provided in this application satisfies the following formulas:

$$0.5 \le (U0 - U) / (1.06 - CB) \le 1.5;$$

$$CB = (A' \times B' \times C') / (A \times B \times C);$$

where A is a mass percentage of the positive active material in the positive active material layer, B is a gram capacity of the positive active material, with a unit of mAh/g, C is a mass per unit area of the positive active material layer, with a unit of mg/cm2, A' is a mass percentage of negative active material in the negative active material layer, B' is a gram capacity of the negative active material, with a unit of mAh/g, and C' is a mass per unit area of the negative active material layer, with a unit of $mg/cm^2$; $U_0$ is a Full-charge Voltage of the battery; U is a Charging Voltage Limit; and U is less than $U_0$.

Referring to FIG. 4, FIG. 4 illustrates the change in negative electrode potential after charging process adjustment. As can be seen from FIG. 4, the Charging Voltage Limit decreases, the negative electrode potential increases, and lithium plating is improved.

In this application, reduction of the CB value of the electrochemical apparatus is combined with reduction of the Charging Voltage Limit, not only ensuring advantages of CB reduction but also not compromising lithium plating capability and charging rate at the same time. A main risk of the CB reduction is deterioration of lithium plating, which, however, is caused by the delayed CC cutoff SOC. In this application, the reduction of the full charge voltage is adopted to improve the lithium plating, while the CB reduction leads to a downward shift in an open circuit voltage (OCV) curve, so that the charging time would not increase significantly and remains within an acceptable range.

It is hereby noted that in the above-mentioned relationship, for any electrochemical apparatus, $U_0$ is fixed and will not be affected by CB, U, the cut-off current, etc. $U_0$ can be determined by electrochemical apparatus system design; or $U_0$ can also be determined by an application state of the electrochemical apparatus, or by disassembling the electrochemical apparatus and analyzing the positive and negative electrode materials.

In this application, by controlling the relationship among the charge cut-off voltage U of the electrochemical apparatus, the Full-charge Voltage $U_0$ of the battery, and the ratio CB of the negative electrode discharge capacity per unit area to the positive electrode discharge capacity per unit area, $0.5 \leq (U_0 - U) / (1.06 - CB) \leq 1.5$, the high-temperature performance of the electrochemical apparatus can be improved while a lithium plating window can be improved, thereby improving kinetic performance of the battery.

The following exemplarily provides the value of $(U_0 - U) / (1.06 - CB)$ for the electrochemical apparatus described above:

in some embodiments of this application, $(U_0 - U) / (1.06 - CB)$ is equal to 0.5, 0.7, 0.9, 1.1, 1.3 or 1.5.

Furthermore, in some embodiments of this application, the aforementioned electrochemical apparatus satisfies the following formula: $0.7 \leq (U_0 - U) / (1.06 - CB) \leq 1.5$.

The relationship among the charge cut-off voltage U of the electrochemical apparatus, the Full-charge Voltage $U_0$ of the battery, and the ratio CB of the negative electrode discharge capacity per unit area to the positive electrode discharge capacity per unit area is controlled within a smaller range, so that the excellent high-temperature performance and lithium plating window of the electrochemical apparatus can be obtained.

Furthermore, in some embodiments of this application, the electrochemical apparatus satisfies the following formula: $0.9 \leq (U_0 - U) / (1.06 - CB) \leq 1.3$.

The relationship among the charge cut-off voltage U of the electrochemical apparatus, the Full-charge Voltage $U_0$ of the battery, and the ratio CB of the negative electrode discharge capacity per unit area to the positive electrode discharge capacity per unit area is controlled within a smaller range, so that the better high-temperature performance and lithium plating window of the electrochemical apparatus can be obtained.

Furthermore, in some embodiments of this application, the aforementioned electrochemical apparatus satisfies the following formula: $1.01 \leq CB \leq 1.05$. By limiting the ratio CB of the negative electrode discharge capacity per unit area to the positive electrode discharge capacity per unit area of the electrochemical apparatus to a smaller range, the high-temperature performance and lithium plating window of the electrochemical apparatus can be improved.

The following exemplarily provides the values of CB for the aforementioned electrochemical apparatus:

in some embodiments of this application, CB is equal to 1.01, 1.02, 1.03, 1.04, or 1.05.

Furthermore, in some embodiments of this application, the aforementioned electrochemical apparatus satisfies the following formula: $1.01 \leq CB \leq 1.03$.

By limiting the ratio CB of the negative electrode discharge capacity per unit area to the positive electrode discharge capacity per unit area of the electrochemical apparatus to a smaller range, the high-temperature performance and lithium plating window of the electrochemical apparatus can be further improved.

The following specific embodiments are listed below to better illustrate this application.

I. Preparing a lithium-ion battery

(1) Preparing a positive electrode plate

Dissolving a positive active material, a conductive agent, and a binder are in an N-methyl-pyrrolidone (NMP) solution at a weight ratio of 97.6 : 1.1 : 1.3 to form a positive electrode slurry. Using an aluminum foil as a positive current collector, and coating the positive electrode slurry onto the positive current collector, with the width of the electrode plate being 80 mm. Setting a coating area as 1540.25 $mm^2$. Drying, cold pressing and slitting to obtain the positive electrode plate.

(2) Preparing a negative electrode plate

Dissolving a negative active material, conductive carbon, and a binder in deionized water at a weight ratio of 97.5 : 0.5 : 2 to form a negative electrode slurry. Using a copper foil as a negative current collector, and coating the negative electrode slurry on the negative current collector, with the width of the electrode plate being 82 mm, and setting the coating area as 1540.25 mm$^2$. Drying, cold pressing, and slitting to obtain the negative electrode plate.

(3) Preparing a separator

Providing polyethylene (PE) with the thickness of 8 $\mu$m as a separator substrate. Coating a 2 $\mu$m aluminum oxide ceramic layer on each side of the separator substrate. Finally, coating 2.5 mg of the binder, i.e., polyvinylidene fluoride (PVDF), on each side of the aluminum oxide ceramic-coated layers and drying the separator substrate.

(4) Preparing an electrolyte solution

In an environment with a water content of less than 10 ppm, preparing lithium hexafluorophosphate and a non-aqueous organic solvent, with a weight ratio of ethylene carbonate : propylene carbonate : diethyl carbonate (DEC) = 1 : 1 : 1, into a basic electrolyte solution, where a concentration of LiPF$_6$ is 1.15 mol/L.

(5) Preparing a lithium-ion battery

Stacking the positive electrode plate, the separator, and the negative electrode plate sequentially, placing the separator between the positive electrode plate and the negative electrode plate to serve the function of separation, and wind to obtain the electrode assembly. Placing the electrode assembly in the aluminum laminated film outer packaging; after dehydrating the electrode assembly at 80 °C, injecting the aforementioned electrolyte solution, and sealing the packaging. Performing processes such as formation, degassing, and edge trimming to obtain the lithium-ion battery.

II. Testing the Lithium-ion battery

Testing method:

(1) Lithium plating test:

First, discharging the lithium-ion battery to a fully discharged state. Then, setting a specific temperature, e.g., 25 °C, and charging the lithium-ion battery at different rates, for example, 1 C, 1.1 C, 1.2 C, according to a design of the lithium-ion battery, in a case of constant current, constant voltage, and an optimized voltage served as a cutoff condition after process optimization, that is, charging to a rated voltage of the lithium-ion battery at a specific rate, then charging at a constant voltage charging until 0.05 C. After charging, discharging fully at 0.2 C. Repeating the above-mentioned charge-discharge process for 10 cycles. Finally, disassembling the fully charged lithium-ion battery and observing whether lithium plating occurs on the negative electrode plate. A maximum current without lithium plating, in a condition that no white spots exists on a surface of the negative electrode plate, is defined as a maximum lithium plating-free rate of the lithium-ion battery, also known as the lithium plating window.

(2) High-temperature cycle test:

Setting a test temperature to 45° C, fully charging the lithium-ion battery using conventional or optimized processes, then discharging it at 1 C to 3.0 V. Repeating this charge-discharge cycle and recording the number of cycles performed when the capacity of the lithium-ion battery attenuated to 80% of the initial capacity.

(3) Charging method

At room temperature (25° C), conducting a full charge test on the lithium-ion battery at a charging rate of 2 C. That is, the 2 C constant current (CC for short) charging to the cutoff voltage, followed by constant voltage (CV for short) charging at the cutoff voltage to 0.05 C. And recording a time taken for the lithium-ion battery is fully charged.

The following parameters in the positive active material layer used for each embodiment and comparative embodiment:
the positive active material, the binder, the conductive agent, the percentage content A of the positive active material, the gram capacity B of the positive active material, and the mass per unit area C of the positive active material are shown in Table 1.

The following parameters in the negative active material layer used for each embodiment and comparative embodiment:

the negative active material, binder, the conductive agent, the percentage content A' of the negative active material, the gram capacity B' of the negative active material, and the mass per unit area C' of the negative active material are shown in Table 2.

The following parameters of the lithium-ion battery in the each embodiment and comparative embodiment: $(U_0 - U) / (1.06 - CB)$, CB, U, and $U_0$ are shown in Table 3.

The following parameters in each embodiment and comparative embodiment:

the lithium plating window, high-temperature cycling, and charging time are shown in Table 3.

Table 1 Positive active material layer

| | Positive active material | Binder | Conductive agent | Percentage content of positive active material A | Gram capacity of positive active material B | Mass per unit area C of positive active material (mg/cm$^2$) |
|---|---|---|---|---|---|---|
| Comparative Embodiment 1 | Lithium cobalt oxide | Polyvinylidene fluoride | Conductive carbon black | 97.60% | 180 | 15.11 |
| Comparative Embodiment 2 | Lithium cobalt oxide | Polyvinylidene fluoride | Conductive carbon black | 97.60% | 180 | 15.11 |
| Comparative Embodiment 3 | Lithium cobalt oxide | Polyvinylidene fluoride | Conductive carbon black | 97.60% | 180 | 15.11 |
| Comparative Embodiment 4 | Lithium cobalt oxide | Polyvinylidene fluoride | Conductive carbon black | 97.60% | 180 | 15.11 |
| Embodiment 1 | Lithium cobalt oxide | Polyvinylidene fluoride | Conductive carbon black | 97.60% | 180 | 15.11 |
| Embodiment 2 | Lithium iron phosphate | Copolymer of vinylidene difluoride and fluorinated olefin | Conductive graphite | 97.60% | 130 | 20.95 |
| Embodiment 3 | Lithium nickel cobalt manganese oxide | Polyvinyl pyrrolidone | Graphene | 97.60% | 190 | 14.35 |
| Embodiment 4 | Lithium nickel cobalt aluminum oxide | Polyacrylonitrile | Acetylene black | 97.60% | 190 | 14.32 |
| Embodiment 5 | Lithium manganese oxide | Polymethyl acrylate | Carbon nanofiber | 97.60% | 140 | 19.93 |
| Embodiment 6 | Lithium cobalt oxide | Polytetrafluoroethylene | Conductive carbon black | 97.60% | 180 | 15.11 |

(continued)

|  | Positive active material | Binder | Conductive agent | Percentage content of positive active material A | Gram capacity of positive active material B | Mass per unit area C of positive active material (mg/cm$^2$) |
|---|---|---|---|---|---|---|
| Embodiment 7 | Lithium co-balt oxide | Sodium carboxymethyl cellulose | Conductive carbon black | 97.60% | 180 | 15.41 |
| Embodiment 8 | Lithium cobalt oxide | Polyurethane | Conductive carbon black | 97.60% | 180 | 14.82 |

Table 2 Negative active material Layer

|  | Negative active material | Binder | Conductive agent | Percentage content A' of negative active material | Gram capacity B' of negative active material | Mass per unit area C' of negative active material (mg/cm$^2$) |
|---|---|---|---|---|---|---|
| Comparative Embodiment 1 | Graphite | Styrene-butadiene rubber | Conductive carbon black | 97.50% | 360 | 7.79 |
| Comparative Embodiment 2 | Graphite | Styrene-butadiene rubber | Conductive carbon black | 97.50% | 360 | 7.79 |
| Comparative Embodiment 3 | Graphite | Styrene-butadiene rubber | Conductive carbon black | 97.50% | 360 | 7.79 |
| Comparative Embodiment 4 | Graphite | Styrene-butadiene rubber | Conductive carbon black | 97.50% | 360 | 7.79 |
| Embodiment 1 | Graphite | Styrene-butadiene rubber | Conductive carbon black | 97.50% | 360 | 7.79 |
| Embodiment 2 | Silicon | Polyvinylidene difluoride | Carbon nanotube | 97.50% | 1800 | 1.56 |
| Embodiment 3 | Silicon alloy | Copolymer of vinylidene difluoride and fluorinated olefin | Conductive graphite | 97.50% | 1900 | 1.48 |
| Embodiment 4 | Stannum alloy | Polyvinyl pyrrolidone | Graphene | 97.50% | 500 | 5.61 |
| Embodiment 5 | Graphite | Polyacrylonitrile | Acetylene black | 97.50% | 360 | 7.79 |
| Embodiment 6 | Graphite | Polymethyl acrylate | Carbon nanofiber | 97.50% | 360 | 7.79 |
| Embodiment 7 | Graphite | Polytetrafluoroethylene | Conductive carbon black | 97.50% | 360 | 7.79 |

(continued)

| | Negative active material | Binder | Conductive agent | Percentage content A' of negative active material | Gram capacity B' of negative active material | Mass per unit area C' of negative active material (mg/cm$^2$) |
|---|---|---|---|---|---|---|
| Embodiment 8 | Graphite | Sodium carboxymethyl cellulose | Conductive carbon black | 97.50% | 360 | 7.79 |

Table 3

| Item | $(U_0 - U)/(1.06 - CB)$ | CB | U | $U_0$ | Lithium plating window at 25° C | Full charge time at 25° C and 2 C (min) | The number of cycles until capacity attenuated to 80% at 45° C |
|---|---|---|---|---|---|---|---|
| Comparative Embodiment 1 | - | 1.03 | 4.5 | 4.5 | 3.0C | 42 | 400 |
| Comparative Embodiment 2 | 0.3 | 1.03 | 4.49 | 4.5 | 2.2C | 33 | 500 |
| Comparative Embodiment 3 | 0.4 | 1.03 | 4.49 | 4.5 | 2.7C | 36 | 510 |
| Comparative Embodiment 4 | 1.6 | 1.03 | 4.45 | 4.5 | 3.4C | 49 | 430 |
| Embodiment 1 | 0.5 | 1.03 | 4.49 | 4.5 | 2.8C | 37 | 525 |
| Embodiment 2 | 0.7 | 1.03 | 4.48 | 4.5 | 2.9C | 39 | 530 |
| Embodiment 3 | 0.9 | 1.03 | 4.47 | 4.5 | 3.0C | 41 | 550 |
| Embodiment 4 | 1.1 | 1.03 | 4.47 | 4.5 | 3.1C | 43 | 530 |
| Embodiment 5 | 1.3 | 1.03 | 4.46 | 4.5 | 3.2C | 45 | 510 |
| Embodiment 6 | 1.5 | 1.03 | 4.46 | 4.5 | 3.3C | 46 | 500 |
| Embodiment 7 | 1.1 | 1.01 | 4.45 | 4.5 | 3.0C | 42 | 560 |
| Embodiment 8 | 1.1 | 1.05 | 4.49 | 4.5 | 3.0C | 42 | 450 |

As can be seen from Tables 1-3:

The lithium-ion battery corresponding to Embodiments 1-8 exhibits excellent high-temperature performance, with the number of cycles ranging from 450 to 560 when the capacity attenuated to 80% at 45° C. In particular, for the lithium-ion battery corresponding to Embodiments 1-7, the lithium-ion battery exhibits excellent high-temperature performance with the number of cycles ranging from 500 to 560 when the capacity attenuated to 80% at 45° C. Moreover, none of the lithium-ion batteries corresponding to Embodiments 1-8 shows severe lithium plating issues: their full charge times ranged from 37 to 46 minutes. The lithium plating window ranged from 2.8 to 3.3C. It can be seen that when the lithium-ion battery satisfies the following formula: $0.5 \le (U_0 - U) / (1.06 - CB) \le 1.5$, the high-temperature performance of the lithium-ion battery can be improved while the lithium plating issue is improved.

Furthermore, it can be seen from Embodiments 2-7 that when the lithium-ion battery satisfies the following formula: $0.7 \le (U_0 - U) / (1.06 - CB) \le 1.5$, the number of cycles ranges from 500 to 560 when the capacity attenuated to 80% at 45 °C, and the lithium plating window of the lithium-ion battery is between 2.9 C and 3.3 C. It can be seen that controlling the relationship among the charging cut-off voltage U of the lithium-ion battery, the Full-charge Voltage $U_0$ of the battery, and the ratio CB of the negative electrode discharge capacity per unit area to the positive electrode discharge capacity per unit area within this range can obtain better high-temperature performance and lithium plating window.

Furthermore, it can be seen from Embodiments 3-7 that when the lithium-ion battery satisfies the following formula: $0.9 \le (U_0 - U) / (1.06 - CB) \le 1.3$, the number of cycles ranges from 510 to 560 when the capacity attenuated to 80% at 45 °C, and the lithium plating window of the lithium-ion battery is between 3.0 C and 3.3 C. It can be seen that controlling the relationship among the charging cut-off voltage U of the lithium-ion battery, the Full-charge Voltage $U_0$ of the battery, and the ratio CB of the negative electrode discharge capacity per unit area to the positive electrode discharge capacity per unit area within this range can obtain better high-temperature performance and lithium plating window.

Furthermore, upon comparison between Embodiment 1 and Comparative Embodiment 1, the lithium-ion battery corresponding to Comparative Embodiment 1 exhibits inferior high-temperature performance, and the number of cycles is only 400 when the capacity attenuated to 80% at 45° C. This is significantly less than the number of cycles of Embodiment 1, i.e., 525.

Furthermore, upon comparison between Embodiment 1 and Comparative Embodiments 2 and 3, when $(U_0 - U) / (1.06 - CB)$ is less than 0.5, the lithium plating window of the lithium-ion battery is reduced to only 2.2-2.7 C.

Furthermore, upon comparison between Embodiment 1 and Comparative Embodiment 4, when $(U_0 - U) / (1.06 - CB)$ is greater than or equal to 1.6, the high-temperature performance of the lithium-ion battery deteriorates, and the number of cycles is only 450 when the capacity attenuated to 80% at 45° C.

Furthermore, upon comparison between Embodiments 2-6 and Embodiment 1, as the value of U is decreased, the lithium plating window of the lithium-ion battery expands, their high-temperature performance remains superior, and the number of cycles ranges from 500 to 550 when the capacity attenuated to 80% at 45° C.

Furthermore, upon comparison between Embodiment 7 and Embodiment 4, when the condition value $(U_0 - U) / (1.06 - CB)$ is 1.1, the lithium plating window of lithium-ion battery expands, the battery has excellent high-temperature resistance, and the number of cycles ranges from 530 to 560 when the capacity attenuated to 80% at 45° C.

Furthermore, upon compared between Embodiment 8 and Embodiment 7, when the condition value $(U_0 - U) / (1.06 - CB)$ is 1.1, the U value is reduced, the lithium plating window of lithium-ion battery expands, the battery has excellent high-temperature resistance, and the number of cycles can reach 560 when the capacity attenuated to 80% at 45° C. However, as the U value increases, although the lithium plating window of lithium-ion battery remains good, their high-temperature resistance performance decreases.

Furthermore, upon compared among Embodiments 4, 7, and 8, when the condition value $(U_0 - U) / (1.06 - CB)$ is 1.1, within a certain range, appropriately reducing the CB value is conducive to improving the lithium plating window. When the CB value is reduced too significant, for example, from 10.5 to 1.01, the lithium plating window is not significantly improved. However, if the CB value is too large, the high-temperature cycle performance is relatively poor. Therefore, when the CB value is selected within the range of 1.01-1.03, it is easier to obtain better lithium plating window and high-temperature cycle performance.

Finally, it should be noted that the above-mentioned embodiments are only adopted to illustrate the technical solutions of this application and are not intended to limit same. Although this application has been described in detail with reference to the foregoing embodiments, a person of ordinary skill in the art should understand that they can still modify the technical solutions described in the foregoing embodiments or equivalently replace some or all of the technical features. However, such modifications and replacements do not make the essence of the corresponding technical solutions depart from the spirit and scope of the technical solutions in each embodiment of this application, but still fall within the protection scope of the claims and specification in this application. In particular, the various technical features mentioned in the various embodiments may be combined in any manner so long as there is no structural conflict. The present application is not limited to the specific embodiments disclosed herein but includes all technical solutions falling within the scope of the claims.

**Claims**

1. An electrochemical apparatus, wherein the electrochemical apparatus comprises:

   a positive active material layer, comprising a positive active material;
   a negative active material layer, comprising a negative active material; and
   the electrochemical apparatus satisfying the following formulas:

   $$0.5 \leq (U0 - U) / (1.06 - CB) \leq 1.5;$$

   $$CB = (A' \times B' \times C') / (A \times B \times C);$$

   wherein A is a mass percentage of the positive active material in the positive active material layer, B is a gram capacity of the positive active material, with a unit of mAh/g, C is a mass per unit area of the positive active material layer, with a unit of mg/cm2, A' is a mass percentage of the negative active material in the negative active material layer, B' is a gram capacity of the negative active material, with a unit of mAh/g, and C' is a mass per unit area of the negative active material layer, with a unit of mg/cm2; $U_0$ is a Full-charge Voltage of the battery; U is a Charging Voltage Limit; and U is less than $U_0$.

2. The electrochemical apparatus according to claim 1, wherein,

$$0.7 \leq (U_0 - U) / (1.06 - CB) \leq 1.5.$$

3. The electrochemical apparatus according to claim 1 or 2, wherein,

$$0.9 \leq (U_0 - U) / (1.06 - CB) \leq 1.3.$$

4. The electrochemical apparatus according to any one of claims 1 to 3, wherein,

$$1.01 \leq CB \leq 1.05.$$

5. The electrochemical apparatus according to any one of claims 1 to 4, wherein,

$$1.01 \leq CB \leq 1.03.$$

6. The electrochemical apparatus according to any one of claims 1 to 5, wherein,
   the positive active material comprises at least one of lithium iron phosphate, lithium cobalt oxide, lithium nickel cobalt manganese oxide, lithium nickel cobalt aluminum oxide, or lithium manganese oxide.

7. The electrochemical apparatus according to any one of claims 1 to 5, wherein,
   the negative active material comprises at least one of graphite, silicon, silicon alloy, or stannum alloy.

8. The electrochemical apparatus according to any one of claims 1 to 5, wherein, the electrochemical apparatus further comprises: a binder; and
   the binder comprises at least one of polyvinylidene difluoride, a copolymer of vinylidene fluoride and fluorinated olefin, polyvinyl pyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol.

9. The electrochemical apparatus according to any one of claims 1 to 5, wherein, the electrochemical apparatus further comprises: a conductive agent; and
   the conductive agent comprises at least one of conductive carbon black, carbon nanotubes, conductive graphite, graphene, acetylene black, or carbon nanofibers.

10. An electrical device, wherein the electrical device comprises the electrochemical apparatus according to any one of claims 1 to 9.

EP 4 672 416 A1

FIG. 1

<u>22</u>

FIG. 2

221

2211

2212                    2212

FIG. 3

$U_{negative\ electrode}$

Embodiment 1
Comparative Embodiment 1

CV

CC

SOC

FIG. 4

## INTERNATIONAL SEARCH REPORT

| International application No. |
|---|
| **PCT/CN2024/076427** |

**A.    CLASSIFICATION OF SUBJECT MATTER**

H01M10/058(2010.01)i;  H01M10/0525(2010.01)i

According to International Patent Classification (IPC) or to both national classification and IPC

**B.    FIELDS SEARCHED**

Minimum documentation searched (classification system followed by classification symbols)

IPC:  H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 正极, 正电极, 阴极, 负极, 负电极, 阳极, 容量, 电压, battery, cell, positive, electrode, cathode, negative, anode, capacit+, voltage

**C.    DOCUMENTS CONSIDERED TO BE RELEVANT**

| Category* | Citation of document, with indication, where appropriate, of the relevant passages | Relevant to claim No. |
|---|---|---|
| PX | CN 115863783 A (NINGDE AMPEREX TECHNOLOGY LTD.) 28 March 2023 (2023-03-28)<br>      claims 1-10 | 1-10 |
| X | CN 110797530 A (HUIZHOU LIWINON NEW ENERGY TECHNOLOGY CO., LTD.) 14 February 2020 (2020-02-14)<br>      description, paragraphs 7-51 and 65-67 | 1, 6-10 |
| A | CN 102723534 A (GUANGZHOU FULLRIVER BATTERY NEW TECHNOLOGY CO., LTD.) 10 October 2012 (2012-10-10)<br>      entire document | 1-10 |
| A | CN 113366673 A (DONGGUAN AMPEREX TECHNOLOGY LIMITED et al.) 07 September 2021 (2021-09-07)<br>      entire document | 1-10 |
| A | WO 2016129629 A1 (HITACHI MAXELL, LTD.) 18 August 2016 (2016-08-18)<br>      entire document | 1-10 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 April 2024** | **06 May 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/076427**

| Patent document cited in search report | | | Publication date (day/month/year) | Patent family member(s) | | | Publication date (day/month/year) |
|---|---|---|---|---|---|---|---|
| CN | 115863783 | A | 28 March 2023 | None | | | |
| CN | 110797530 | A | 14 February 2020 | None | | | |
| CN | 102723534 | A | 10 October 2012 | WO | 2012129974 | A1 | 04 October 2012 |
| CN | 113366673 | A | 07 September 2021 | None | | | |
| WO | 2016129629 | A1 | 18 August 2016 | JPWO | 2016129629 | A1 | 24 November 2017 |

Form PCT/ISA/210 (patent family annex) (July 2022)

**EP 4 672 416 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310182855X